(19) Europäisches Patentamt
European Patent Office
Office européen des brevets

(11) **EP 1 741 885 B1**

(12) **EUROPEAN PATENT SPECIFICATION**

(45) Date of publication and mention
of the grant of the patent:
**18.01.2012 Bulletin 2012/03**

(51) Int Cl.:
***F01N 9/00*** *(2006.01)*

(21) Application number: **06009579.1**

(22) Date of filing: **09.05.2006**

(54) **Exhaust gas purifying apparatus for internal combustion engine**

Vorrichtung zur Abgasreinigung für eine Brennkraftmaschine

Epurateur de gaz d'échappement pour moteur thermique

(84) Designated Contracting States:
**DE FR GB**

(30) Priority: **18.05.2005 JP 2005145945**

(43) Date of publication of application:
**10.01.2007 Bulletin 2007/02**

(73) Proprietor: **HONDA MOTOR CO., LTD.**
**Tokyo 107-8556 (JP)**

(72) Inventors:
• **Okayasu, Kouji**
  **Wako-shi**
  **Saitama (JP)**
• **Matsui, Ryuta**
  **Wako-shi**
  **Saitama (JP)**
• **Endo, Masatoshi**
  **Wako-shi**
  **Saitama (JP)**

(74) Representative: **Prechtel, Jörg et al**
  **Weickmann & Weickmann**
  **Patentanwälte**
  **Postfach 86 08 20**
  **81635 München (DE)**

(56) References cited:
EP-A- 1 464 818        EP-A1- 1 464 815
US-A- 5 842 459        US-A1- 2003 023 367
US-B1- 6 651 638

**Description**

BACKGROUND OF THE INVENTION

Field of the Invention

The present invention relates to an exhaust gas purifying apparatus for an internal combustion engine, and particularly to the apparatus having a particulate filter (DPF: Diesel Particulate Filter) which traps particulates (particulate matter) in exhaust gases of the internal combustion engine.

Description of the Related Art

A technique of providing a DPF which traps particulates in exhaust gases in the exhaust system of a diesel internal combustion engine and reduces an emission amount of the particulates, is widely used. Since there is a limit in the amount of particulates that can be trapped in the DPF, the amount of particulates accumulated in the DPF is estimated, and a regeneration process for burning the particulates accumulated in the DPF is performed when the estimated amount of particulates reaches a predetermined threshold value. The regeneration process is performed, for example, by increasing an amount of fuel supplied to the engine (fuel injection amount) and raising an exhaust gas temperature.

Further, JP 2001-123870 A shows a technique that a temperature raising control for raising the exhaust gas temperature is performed so as to reduce an emission amount of unburnt HC during the warming-up operation of the diesel internal combustion engine. In this technique, it is determined whether or not an exhaust gas temperature sensor for detecting an exhaust gas temperature is abnormal, and the temperature raising control is stopped when the abnormality of the exhaust gas temperature sensor is detected.

The amount of particulates accumulated in the DPF is calculated according to an engine operating condition including an engine rotational speed, an engine load, an engine coolant temperature, and the like. Therefore, if an abnormality is present in sensors for detecting these engine operating parameters or devices for performing the fuel supply (such as fuel injection valves, a fuel pump, and the like), a difference between the calculated particulate accumulation amount and an actual particulate accumulation amount becomes significant, which may cause a delay of an execution timing of the regeneration process with respect to the optimal timing. If the DPF regeneration process is performed in such case, the temperature of the DPF may rise too much, and the DPF may possibly fail.

In order to avoid such inconvenience, it is considered that the technique shown in the JP 2001-123870 A is applied to inhibit the DPF regeneration process when an abnormality of sensors or the like is detected. However, in the high-load operating condition of the engine, the so-called natural regeneration is performed. In the natural regeneration, the exhaust gas temperature rises and the accumulated particulates naturally bum without performing the regeneration process. Consequently, merely inhibiting the DPF regeneration process is not sufficient for avoiding the inconvenience.

EP-A1-1 464 815 shows an exhaust gas purifying apparatus in accordance with the preamble of claim 1.

US-B1-6 651 638 shows a safety system for a diesel engine mounted with a particle filter limiting the torque when excessive clogging is detected so as to force rapid maintenance/servicing of the particle filter.

SUMMARY OF THE INVENTION

The present invention was attained in view of the above-described point, and an object of the present invention is to provide an exhaust gas purifying apparatus for an internal combustion engine, that can perform a more suitable fail-safe process when the abnormality of sensors or the like is detected, thereby preventing the failure of the DPF.

In order to attain the above object, the present invention provides an exhaust gas purifying apparatus for an internal combustion engine in accordance with claim 1 and a corresponding method in accordance with claim 3.

The exhaust gas purifying apparatus comprises: a particulate filter (17) for trapping particulates in exhaust gases of the engine (1). The exhaust gas purifying apparatus includes operating condition detecting means, accumulation amount calculating means, regeneration means, first abnormality detecting means, inhibiting means, and first torque suppressing means. The operating condition detecting means detects an operating condition of the engine (1). The accumulation amount calculating means calculates an amount of particulates accumulated in the particulate filter (GPM) according to the detected operating condition of the engine. The regeneration means performs a regeneration process in which the accumulated particulates is burned when the particulate amount (GPM) reaches a predetermined threshold value (GPML). The first abnormality detecting means detects an abnormality of at least one regeneration relevant device (6, 12, 13,15, 17,19, 21, 23 - 25, 28 - 33) which affects calculation accuracy of the particulate amount (GPM) calculated by the accumulation amount calculating means. The inhibiting means for inhibiting the regeneration process by the regeneration means when the abnormality of the at least one regeneration relevant device is detected. The first torque suppressing means suppresses an output torque of the engine when the abnormality of the at least one regeneration relevant device is detected.

Specifically, the suppressing of the engine output torque is performed by inhibiting the high-load operation of the engine in which the particulates accumulated in the particulate filter naturally bum.

With this configuration, an amount of particulates accumulated in the particulate filter is calculated according to the detected engine operating condition and the regeneration process for burning the accumulated particulates is performed when the calculated particulate accumulation amount reaches the predetermined threshold value. An abnormality of the at least one regeneration relevant device which affects the calculation accuracy of the particulate accumulation amount is determined, and the regeneration process is inhibited and also the output torque of the engine is suppressed when the abnormality of the at least one regeneration relevant device is detected. By suppressing the output torque of the engine, the so-called natural regeneration in which the particulates accumulated in the particulate filter naturally burn (without performing the regeneration process), is not performed. Consequently, the failure caused by abnormal heat-up of the particulate filter can be prevented.

The torque suppressing means suppresses the output torque by limiting an amount (QINJ) of fuel supplied to the engine.

With this configuration, the engine output torque is suppressed by limiting the amount of fuel supplied to the engine, which prevents the abnormal heat-up of the particulate filter.

Preferably, the vehicle driven by the engine includes drive control means for controlling a running condition of the vehicle, and the exhaust gas purifying apparatus further includes drive control stopping means for stopping an execution of the drive control means when the abnormality of the at least one regeneration relevant device is detected.

With this configuration, the drive control including the engine output torque control is stopped when the abnormality of the regeneration relevant device which affects the calculation accuracy of the particulate accumulation amount is detected. Since the engine output torque is suppressed when the abnormality of the above-described device is detected, the drive control including the engine output torque control may not be performed appropriately. Therefore, disorder of the drive control can be prevented by stopping the drive control including the engine output torque control.

The exhaust gas purifying apparatus further includes second abnormality detecting means for detecting an abnormality of at least one device other than the regeneration relevant device, and second torque suppressing means for suppressing the output torque of the engine when the abnormality of at least one device other than the regeneration relevant device is detected.

The degree of the output torque suppression by the first torque suppressing means is less than the degree of the output torque suppression by the second torque suppressing means.

BRIEF DESCRIPTION OF THE DRAWINGS

FIG. 1 is a schematic diagram showing a configuration of an internal combustion engine and a control system therefor according to an embodiment of the present invention;

FIG. 2 is a flowchart of a process for controlling the regeneration process of the DPF;

FIG. 3 is a flowchart of a process for calculating a fuel injection amount (QINJ).

FIG. 4 is a diagram showing a table used in the process of FIG. 3;

FIG. 5 is a flowchart of a process for performing the cruise control; and

FIG. 6 is a flowchart of a process for setting a flag (FFAIL1) referred to in the process of FIG. 3.

DETAILED DESCRIPTION OF THE PREFERRED EMBODIMENTS

Preferred embodiments of the present invention will now be described with reference to the drawings.

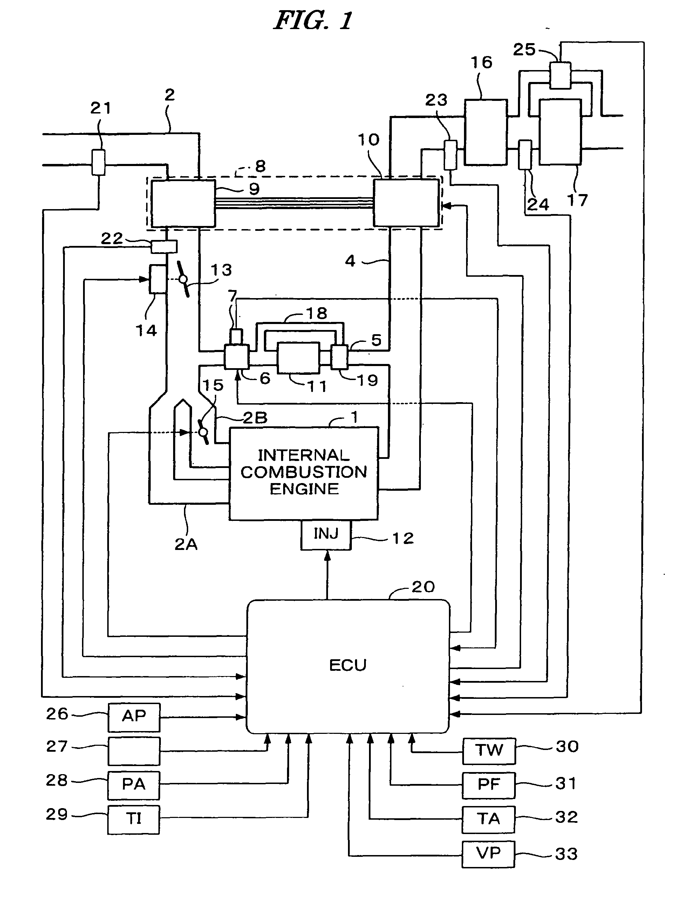

FIG. 1 is a schematic diagram showing a configuration of an internal combustion engine (hereinafter referred to as "engine") and its control system according to one embodiment of the present invention. The engine 1 is a diesel engine in which fuel is injected directly into cylinders. Each cylinder is provided with a fuel injection valve 12. The fuel injection valve 12 is electrically connected to the electronic control unit (hereinafter referred to as "ECU") 20, and the valve opening period and the valve opening timing of the fuel injection valve 12 are controlled by the ECU 20. Fuel pressurized by a high-pressure pump (not shown) is supplied to the fuel injection valve 12.

The engine 1 is provided with an intake pipe 2, an exhaust pipe 4, and a turbocharger 8. The turbocharger 8 includes a turbine 10 driven by the kinetic energy of exhaust gases, and a compressor 9 for compressing the intake air. The compressor 9 is rotationally driven by the turbine 10.

The turbine 10 has a plurality of movable vanes (not shown), and is configured so that the rotational speed of the turbine can be varied by changing an opening of movable vane (hereinafter referred to as "vane opening"). The vane opening VO of the turbine 10 is electro-magnetically controlled by the ECU 20.

An intake shutter 13 for controlling an intake air amount is disposed downstream of the compressor 9 in the intake pipe 2. The intake shutter 13 is driven by an actuator 14, and the actuator 14 is connected to the ECU 20. The opening of the intake shutter 13 is controlled by the ECU 20.

The intake pipe 2 branches out into intake pipes 2A and 2B on the downstream side of the intake shutter 13, and further branches out corresponding to each cylinder. It is to be noted that only the configuration corresponding to one cylinder is shown in FIG. 1.

Each cylinder of the engine 1 is provided two intake valves (not shown) and two exhaust valves (not shown). Two intake gates (not shown), opened and closed by the two intake valves, are connected respectively to the intake pipes 2A and 2B.

Further, a swirl control valve (hereinafter referred to as "SCV") 15 is disposed in the intake pipe 2B. The SCV 15 restricts the amount of air inhaled through the intake pipe 2B to generate a swirl in the combustion chamber of the engine 1. The SCV 15 is a butterfly valve driven by an actuator (not shown) and the valve opening is controlled by the ECU 20.

An exhaust gas recirculation passage 5 is provided between the exhaust pipe 4 and the downstream side of the intake shutter 13 in the intake pipe 2. The exhaust gas recirculation passage 5 recirculates exhaust gases to the intake pipe 2. The exhaust gas recirculation passage 5 is provided with a recirculation gas cooler 11 for cooling recirculated gases, a bypass passage 18 for bypassing the recirculation gas cooler 11, a switching valve 19, and an exhaust gas recirculation control valve (hereinafter referred to as "EGR valve") 6 for controlling an amount of recirculated exhaust gas. The switching valve 19 switches between a state where the exhaust gas recirculation passage 5 is connected to the recirculation gas cooler 11 and a state where the exhaust gas recirculation passage 5 is connected to the bypass passage 18. The EGR valve 6 is a negative pressure control valve, which is opened and closed by a negative pressure in the intake pipe. The valve opening of the EGR valve 6 is controlled by the ECU 20. The EGR valve 6 is provided with a lift sensor 7 for detecting a valve opening (valve lift amount) LACT. The detection signal of the lift sensor 7 is supplied to the ECU 20. An exhaust gas recirculation mechanism consists of the exhaust gas recirculation passage 5, the recirculation gas cooler 11, the bypass passage 18, the switching valve 19, and the EGR valve 6. The EGR valve 6 is controlled with a control signal of a variable duty-ratio so that the valve opening LACT coincides with a lift amount command value LCMD which is set according to the engine operating condition. The switching valve 19 is switched to the bypass passage 18 side immediately after the cold start of the engine 1, and is switched to the recirculation gas cooler 11 side after completion of the warming-up of the engine 1.

An intake air flow rate sensor 21 for detecting an intake air flow rate GA (an intake air amount of the engine 1 per unit time period) and a boost pressure sensor 22 for detecting a boost pressure PB on the downstream side of the compressor 9 are disposed in the intake pipe 2. The detection signals from the intake air flow rate sensor 21 and the boost pressure sensor 22 are supplied to the ECU 20.

The exhaust pipe 4 is provided with a catalytic converter 16 for purifying the exhaust gases and a DPF 17 in this order from the upstream side. The catalytic converter 16 and the DPF 17 are disposed downstream of the turbine 10.

The catalytic converter 16 contains an oxidation catalyst for accelerating oxidization of hydrocarbon and carbon monoxide in the exhaust gases. Further, the catalytic converter 16 may be include a NOx adsorbent and a catalyst for reducing NOx.

The DPF 17 traps soot which consists of particulates whose main component is carbon (C) in the exhaust gases, when the exhaust gases pass through small holes in the filter wall. Specifically, the inflowing soot is accumulated on the surface of the filter wall and in the small hole in the filter wall. For example, ceramics such as silicon carbide (SiC) or porous material is used as materials for the filter wall.

If the DPF 17 traps soot up to the upper limit of the soot trapping capacity, i.e., to the accumulation limit, the exhaust pressure excessively rises. Therefore, it is necessary to timely perform the regeneration process for burning the trapped soot. In the regeneration process, the post-injection is performed for raising the temperature of exhaust gases to the burning temperature of soot. The post-injection is performed during the exhaust stroke through the fuel injection valve 12. The fuel injected by the post-injection burns in the catalytic converter 16, which raises the temperature of the exhaust gases flowing into the DPF 17.

On the upstream side of the catalytic converter 16, a first exhaust gas temperature sensor 23 for detecting a first exhaust gas temperature TE1 is provided, and on the upstream side of the DPF 17, a second exhaust gas temperature sensor 24 for detecting a second exhaust gas temperature TE2 is provided. Further, a pressure difference sensor 25 is provided for detecting a pressure difference DP between the upstream side pressure and the downstream side pressure of the DPF 17. The detection signals from these sensors are supplied to the ECU 20.

Further, an accelerator sensor 26, a crank angle position sensor 27, an atmospheric pressure sensor 28, an intake air temperature sensor 29, a coolant temperature sensor 30, a fuel pressure sensor 31, an atmospheric temperature sensor 32, and a vehicle speed sensor 33 are provided. The accelerator sensor 26 detects an operation amount AP of an accelerator pedal (not shown) of a vehicle driven by the engine 1 (hereinafter referred to as "accelerator operation amount"), the crank angle position sensor 27 detects a rotational angle of a crankshaft (not shown) of the engine 1, the atmospheric pressure sensor 28 detects an atmospheric pressure PA, the intake air temperature sensor 29 detects an intake air temperature TI, the coolant temperature sensor 30 detects a coolant temperature TW of the engine 1, the fuel pressure sensor 31 detects a pressure PF of pressurized fuel supplied to the fuel injection valve 12, the atmospheric temperature sensor 32 detects an atmospheric temperature TA, and the vehicle speed sensor 33 detects a vehicle speed VP of the vehicle driven by the engine 1. The detection signals from these sensors are supplied to the ECU 20.

The clank angle position sensor 26 consists of a cylinder discrimination sensor for outputting a pulse at a predetermined crank angle position for a specific cylinder of the engine 1 (this pulse will be hereinafter referred to as "CYL pulse"). The crank angle position sensor 26 also consists of a TDC sensor for outputting a TDC pulse at a crank angle position before a top dead center (TDC) of a predetermined crank angle starting at an intake stroke in each cylinder (at every 180 deg crank angle in the case of a four-cylinder engine), and a CRK sensor for generating a CRK pulse with a constant crank angle period (e.g., a period of 30 deg) shorter than the period of generation of the TDC pulse. The CYL pulse, the TDC pulse, and the CRK pulse are supplied to the ECU 20. These pulses are used to control fuel injection timing and for detection of an engine rotational speed NE.

The ECU 20 includes an input circuit, a central processing unit (hereinafter referred to as "CPU"), a memory circuit, and an output circuit. The input circuit performs numerous functions, including shaping the waveforms of input signals from the various sensors, correcting the voltage levels of the input signals to a predetermined level, and converting analog signal values into digital signal values. The memory circuit preliminarily stores various operating programs to be executed by the CPU and stores the results of computations or the like by the CPU. The output circuit supplies control signals to the fuel injection valve 12, the EGR valve 6, the SCV 15, the turbine 10, the actuator 14 and the like.

The ECU 20 monitors the particulate accumulation amount of the DPF 17, and performs the DPF regeneration process for burning the accumulated particulates, when the particulate accumulation amount becomes great. The ECU 20 calculates a fuel injection amount QINJ injected from the fuel injection valve 12, and controls a valve opening period of the fuel injection valve 12 according to the calculated fuel injection amount QINJ. Further, the ECU 20 performs an abnormality detection of the control devices, such as various sensors described above, the exhaust gas recirculation mechanism, the fuel injection valves, and the like, and controls a fail-safe operation according to the detected result.

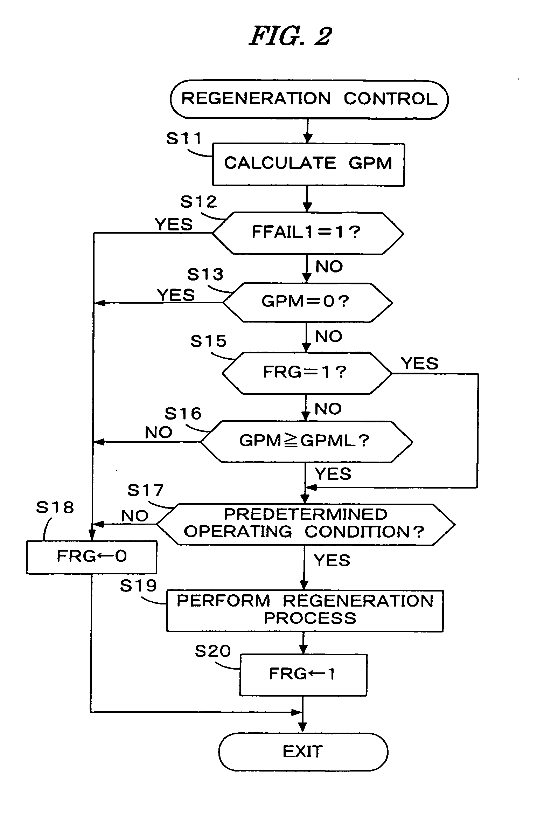

FIG. 2 is a flowchart of the regeneration control process for controlling an execution of the DPF regeneration process. This process is executed by the CPU in the ECU 20 at predetermined time intervals of T1.

In step S11, the particulate accumulation amount GPM of the DPF 17 is calculated as described below. First, an emission amount GPMUT of particulates of the engine 1 per predetermined time period T1 is calculated by the following equation (1). The emission amount GPMUT is hereinafter referred to as "particulate change amount GPMUT".

$$GPMUT = PMBASE + PMCR - PMRG \qquad (1)$$

PMBASE is a basic value calculated according to the engine rotational speed NE and the fuel injection amount QINJ. PMCR is a correction term calculated according to the coolant temperature TW, the atmospheric pressure PA, and the intake air temperature TI. PMRG is a natural regeneration correction term calculated according to the intake air flow rate GA, the second exhaust gas temperature TE2, and the pressure difference DP. The natural regeneration correction term PMRG is based on the fact that the particulates accumulated in the DPF 17 burns in the high-load operating condition of the engine 1.

The particulate accumulation amount GPM of the DPF 17 is calculated by integrating the particulate change amount GPMUT. The particulate change amount GPMUT is set to a negative predetermined value when the DPF regeneration process is performed. Accordingly, the particulate accumulation amount GPM decreases with time elapsing. The minimum value of the particulate accumulation amount GPM is limited to "0", i.e., the limit process is performed so that the particulate accumulation amount GPM may not take a negative value. The fuel injection amount QINJ is calculated according to the engine rotational speed NE and the accelerator operation amount AP indicating a demand torque of the engine 1.

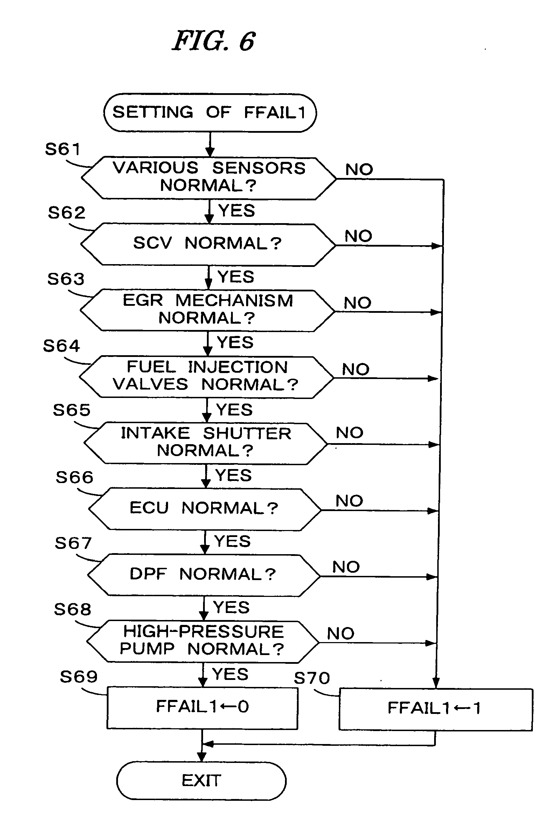

In step S12, it is determined whether or not a first abnormality detection flag FFAIL1 is "1". The first abnormality detection flag FFAIL1 is set to "1" when the abnormality of at least one device which affects calculation accuracy of the particulate accumulation amount GPM calculated in step S11, is detected (the device is hereinafter referred to as "regeneration relevant device")(refer to FIG. 6). A device which affects the amount of particulates actually discharged from the engine 1, a device which affects the calculation result of the particulate accumulation amount GPM described above, and the DPF 17 correspond to the regeneration relevant device.

Since the answer to step S12 is normally negative (NO), the process proceeds to step S13, in which it is determined whether or not the particulate accumulation amount GPM is "0". The answer to step S13 is negative (NO) except the time of completion of the DPF regeneration process. Therefore, the process normally proceeds to step S15, in which it is determined whether or not a regeneration execution flag FRG is "1". Since the answer to step S15 is initially negative (NO), it is determined whether or not the particulate accumulation amount GPM is equal to or greater than a determination threshold value GPML (step S16). Since the answer to step S16 is negative (NO) at first, the process proceeds to step S18, in which the regeneration execution flag FRG is set to "0".

When the particulate accumulation amount GPM gradually increases to become equal to or greater than the determination threshold value GPML in step S16, the process proceeds to step S17, in which it is determined whether or not the operating condition of the engine 1 is a predetermined operating condition where the regeneration process can be performed. The predetermined operating condition is determined according to the engine rotational speed NE and the fuel injection amount QINJ. For example, when the engine rotational speed NE is equal to a value between 1000 rpm and 4000 rpm and the fuel injection amount QINJ is equal to a value of about 70% or less of the fuel injection amount in the full load operation, the operating condition of the engine 1 is determined as the predetermined operating condition.

If the engine operating condition is not the predetermined operating condition, the process proceeds to step S18 described above, while if the engine operating condition is the predetermined operating condition, the regeneration process (post-injection) is performed (step S19), and the regeneration execution flag FRG is set to "1" (step S20).

If step S20 is executed, the answer to step S15 becomes affirmative (YES). Accordingly, the process proceeds to step S19 via step S17 as long as the engine operating condition is the predetermined operating condition. If the particulate accumulation amount GPM becomes "0", the process proceeds from step S13 to step S18, in which the regeneration execution flag FRG is returned to "0".

On the other hand, if the first abnormality detection flag FFAIL1 is set to "1", the process proceeds from step S12 to step S18. Accordingly, the regeneration process will no longer be performed. As a result, the situation where the regeneration process is performed and the temperature of the DPF 17 may excessively rise when the regeneration relevant device is abnormal, can be avoided.

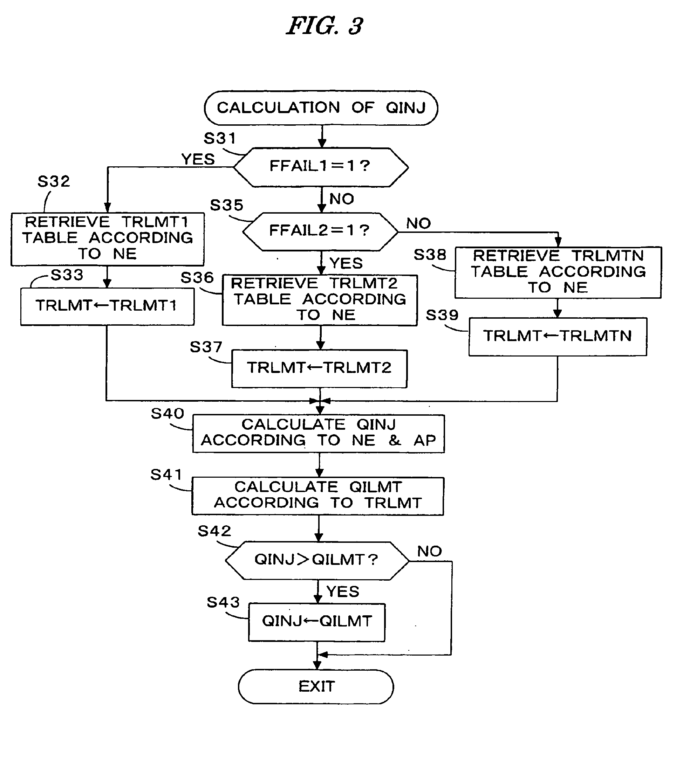

FIG. 3 is a flowchart of the process for calculating the fuel injection amount QINJ. This process is executed by the CPU of the ECU 20 in synchronism with the TDC pulse.

In step S31, it is determined whether or not the first abnormality detection flag FFAIL1 is "1". If all of the regeneration relevant devices are normal, the process proceeds to step S35, in which it is determined whether or not a second abnormality detection flag FFAIL2 is "1". The second abnormality detection flag FFAIL2 is set to "1", when the abnormality of the devices except the regeneration relevant devices (e.g., the ON failure of the glow plug) is detected.

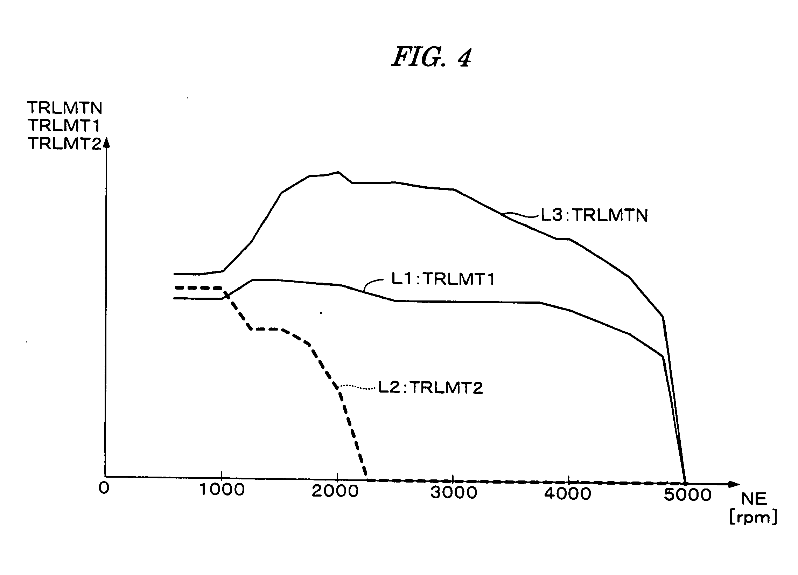

If the answer to step S35 is negative (NO), i.e., the abnormality is not detected at all, a TRLMTN table shown by the solid line L3 in FIG. 4 is retrieved according to the engine rotational speed NE to calculate a normal operation torque limit value TRLMTN (step S38). Subsequently, a torque limit value TRLMT is set to the normal operation torque limit value TRLMTN calculated in step S38 (step S39), and the process proceeds to step S40.

If the answer to step S35 is affirmative (YES), i.e., the abnormality of a device other than the regeneration relevant devices is detected, a TRLMT2 table shown by the dashed line L2 in FIG. 4 is retrieved according to the engine rotational speed NE to calculate a second torque limit value TRLMT2 (step S36). The TRLMT2 table is set so that the second torque limit value TRLMT2 decreases as the engine rotational speed NE increases and the second torque limit value TRLMT2 is equal to "0" in the range where the engine rotational speed NE is equal to or greater than 2200 rpm. Subsequently, the torque limit value TRLMT is set to the second torque limit value TRLMT2 (step S37), and the process proceeds to step S40.

If the answer to step S31 is affirmative (YES), i.e., the abnormality of the regeneration relevant device is detected, a TRLMT1 table shown by the solid line L1 in FIG. 4 is retrieved according to the engine rotational speed NE to calculate a first torque limit value TRLMT1 (step S33). The TRLMT1 table is set so that the first torque limit value TRLMT1 is less than the normal operation torque limit value TRLMTN and greater than the second torque limit value TRLMT2 except for the range where the engine rotational speed NR is equal to or less than 1000 rpm. Subsequently, the torque limit value TRLMT is set to the first torque limit value TRLMT1 (step S33), and the process proceeds to step S40.

In step S40, the fuel injection amount QINJ is calculated according to the engine rotational speed NE and the accelerator operation amount AP. In step S41, a maximum fuel injection amount QILMT is calculated according to the torque limit value TRLMT calculated in step S33, S37, or S39. The maximum fuel injection amount QILMT is calculated as substantially proportional to the torque limit value TRLMT.

It is determined whether or not the fuel injection amount QINJ calculated in step S40 is greater than the maximum fuel injection amount QILMT (step S42). If the answer to step S42 is negative (NO), the process immediately ends. If the answer to step S42 is affirmative (YES), the fuel injection amount QINJ is set to the maximum fuel injection amount QILMT (step S43).

According to the process of FIG. 3, the torque limit value TRLMT is set to a value which is less than the value for the normal operation, when the abnormality of the regeneration relevant device is detected. This suppresses the rise in the exhaust gas temperature and prevent the so-called natural regeneration in which the accumulated particulates in the DPF 17 naturally burn. Therefore, the failure of the DPF 17 caused by unusual temperature rise can be prevented.

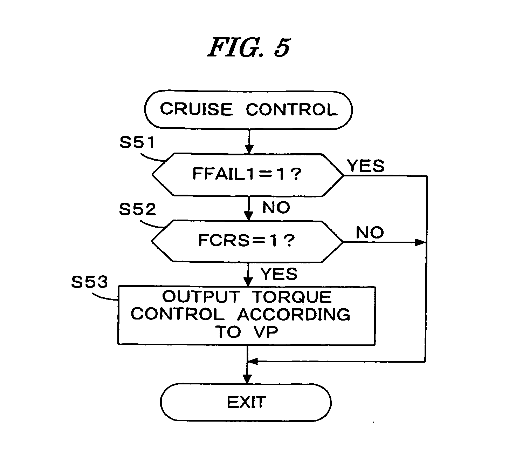

FIG. 5 is a flowchart of a process for performing the cruise control. This process is executed at predetermined time intervals in the CPU of the ECU 20.

In step S51, it is determined whether or not the first abnormality detection flag FFAIL1 is "1". If the answer to step S51 is affirmative (YES), the process ends without performing the cruise control.

If the answer to step S51 is negative (NO), it is determined whether or not a cruise control execution flag FCR is "1". The cruise control execution flag FCR is set to "1", when a predetermined cruise control execution condition is satisfied. If FCR is equal to "0", the process immediately ends. If FCR is equal to "1", the engine output torque (fuel injection amount QINJ) is controlled according to the vehicle speed VP, i.e., the engine output torque is controlled so as to maintain the set vehicle speed (step S53).

As described above, when the first abnormality detection flag FFAIL1 is set to "1", the vehicle drive control including the engine output torque control is not performed. This is because, when the abnormality of the regeneration relevant device is detected, the vehicle drive control including the engine output torque control may not be appropriately performed due to the suppression of the engine output torque. That is, when the abnormality of the regeneration relevant device is detected, disorder of the vehicle drive control can be prevented by stopping the vehicle drive control including the engine output torque control.

The regeneration relevant devices include the devices that affect the amount of particulates discharged from the engine 1, the devices that affect the calculation results of the above-described particulate accumulation amount calculated according to the engine operating condition, and the devices that affect the amount of the particulates actually accumulated in the DPF 17. The devices that affect the discharged particulate amount are, for example, a SCV 15 (including a SCV opening sensor (not shown) for detecting the opening of the SCV 15), the intake air flow rate sensor 21, the exhaust gas recirculation mechanism, the boost pressure sensor 22, the intake shutter 13 (including a shutter opening sensor (not shown) for detecting the opening of the intake shutter 13), the fuel injection valve 12, the fuel pressure sensor 31, and a high-pressure pump (not shown) for pressurizing fuel. The devices that affect the calculation result of the particulate accumulation amount are, for example, the intake air flow rate sensor 21, the atmospheric pressure sensor 28, the coolant temperature sensor 30, the memory circuit of the ECU 20 and a circuit for supplying electric power to the various sensors, the intake air temperature sensor 29, the atmospheric temperature sensor 32, the first and the second exhaust gas temperature sensors 23 and 24, the pressure difference sensor 25, and the vehicle speed sensor 33. The particulate accumulation amount GPM is stored in the memory circuit of the ECU 20, and the stored value is held during stoppage of the engine. Therefore, when an abnormality occurs in the memory circuit, the calculation result of the particulate accumulation amount GPM may become inaccurate. Accordingly, the memory circuit of the ECU 20 is included in the regeneration relevant devices. When leak or clogging is present in the DPF 17, the actual particulate accumulation amount is completely different from the particulate accumulation amount corresponding to the normal state of the DPF 17. Accordingly, the DPF 17 per se is included in the regeneration relevant devices.

FIG. 6 is a flowchart showing a process for setting the first abnormality detection flag FFAIL1 that is referred to in the process of FIG. 3. This process is executed by the CPU in the ECU 20 at the predetermined time intervals.

In step S61, it is determined whether or not the above-described various sensors included in the regeneration relevant devices are normal. For example, the sensor is determined to be abnormal when the state where the sensor output value is stuck to the minimum value or the maximum value continues for a predetermined time period or more.

If the answer to step S61 is affirmative (YES), it is determined whether or not the SCV 15 (and the opening sensor) is normal (step S62). The abnormality of the SCV 15 is detected based on the relationship between the control signal supplied to the actuator of the SCV 15 and the opening detected by the opening sensor.

If the answer to step S62 is affirmative (YES), it is determined whether or not the exhaust gas recirculation mechanism is normal (step S63). For example, when a disconnection or an earth fault (grand short-circuit) of the EGR valve 6 or the switching valve 19 is detected, the exhaust gas recirculation mechanism is determined to be abnormal.

If the answer to step S63 is affirmative (YES), it is determined whether or not the fuel injection valve 12 is normal (step S64). For example, when a disconnection or an earth fault of the fuel injection valve 12 is detected, the fuel injection valve 12 is determined to be abnormal.

If the answer to step S64 is affirmative (YES), it is determined whether or not the intake shutter 13 is normal (step S65). The abnormality of the intake shutter 13 is determined, for example, based on the relationship between the opening of the intake shutter 13 and the control signal supplied to the actuator 14.

If the answer to step S65 is affirmative (YES), it is determined whether or not the memory circuit of the ECU 20 and the power supply circuit for the sensors are normal (step S66). For example, the abnormality determination is performed by checking voltages at the predetermined test points of the circuit.

If the answer to step S66 is affirmative (YES), it is determined whether or not the DPF 17 is normal (step S67). Leak or clogging of the DPF 17 is determined based on the relationship between the flow rate of exhaust gases from the engine 1 and the pressure difference DP.

If the answer to step S67 is affirmative (YES), it is determined whether or not the high-pressure pump for pressurizing fuel is normal (step S68). The abnormality of the high-pressure pump is determined, for example, based on the detected fuel pressure PF.

If the answer to step S68 is affirmative (YES), i.e., all of the regeneration relevant devices are normal, the first abnormality detection flag FFAIL1 is set to "0" (step S69). On the other hand, if the answer to any one of steps S61 to S68 is negative (NO), the first abnormality detection flag FFAIL1 is set to "1" (step S70).

As described above, in the present embodiment, when the abnormality of the regeneration relevant device is detected, the regeneration process is inhibited, and also the torque limit value TRLMT of the engine 1 is set to a value which is less than the usual value, so that the natural regeneration is not performed. Accordingly, the particulates are prevented from burning in the state where the particulate accumulation amount of the DPF 17 is excessively large. Consequently, the failure due to the abnormal rise in the temperature of the DPF17 can be prevented.

Further, the vehicle drive control including the control of the engine output torque is not performed when the abnormality of the regeneration relevant device is detected. Consequently, disorder of the vehicle drive control can be prevented.

The present invention is not limited to the embodiment described above, and various modifications may be made. In the above-described embodiment, the cruise control is shown as an example of the vehicle drive control including the control of the engine output torque. The vehicle stabilization control is also an example of the vehicle drive control including the control of the engine output torque. In the vehicle stabilization control, distribution of the driving forces applied to the right and left driving wheels is changed when turning the vehicle.

Further, the present invention can be applied also to an exhaust gas purifying apparatus for a watercraft propulsion engine such as an outboard engine having a vertically extending crankshaft.

The present invention may be embodied in other specific forms without departing from the essential characteristics thereof. The presently disclosed embodiments are therefore to be considered in all respects as illustrative and not restrictive, the scope of the invention being indicated by the appended claims, rather than the foregoing description, and all changes which come within the meaning and range of equivalency of the claims are, therefore, to be embraced therein.

An exhaust gas purifying apparatus for an internal combustion engine having a particulate filter for trapping particulates in exhaust gases of the engine is disclosed. An amount of particulates accumulated in the particulate filter is calculated according to the detected operating condition of the engine. A regeneration process in which the accumulated particulates are burned is performed when the amount of particulates reaches a predetermined threshold value. An abnormality of at least one regeneration relevant device which affects calculation accuracy of the calculated amount of particulates is detected. The regeneration process is inhibited and an output torque of the engine is suppressed when the abnormality of the at least one regeneration relevant device is detected.

**Claims**

1. An exhaust gas purifying apparatus for an internal combustion engine (1) comprising:

   a particulate filter (17) for trapping particulates in exhaust gases of said engine (1);
   operating condition detecting means (26-33) for detecting an operating condition of said engine;
   accumulation amount calculating means for calculating an amount (GPM) of particulates accumulated in said particulate filter (17) according to the detected operating condition of said engine (1);
   regeneration means for performing a regeneration process in which the accumulated particulates are burned when the amount of particulates reaches a predetermined threshold value (GPML);
   first abnormality detecting means for detecting an abnormality of at least one regeneration relevant device (6, 12, 13, 15, 17, 19, 21, 23 - 25, 28 - 33) which affects calculation accuracy of the amount of particulates (GPM) calculated by said accumulation amount calculating means; and
   inhibiting means for inhibiting the regeneration process by said regeneration means when the abnormality of said at least one regeneration relevant device is detected; **characterized by**
   first torque suppressing means for suppressing an output torque of said engine (1) when the abnormality of said at least one regeneration relevant device is detected by limiting an amount of fuel (QINJ) supplied to said engine (1) so that the particulates accumulated in the particulate filter (17) may not naturally bum,
   further including second abnormality detecting means for detecting an abnormality of at least one device other than the regeneration relevant device, and second torque suppressing means for suppressing the output torque of said engine (1) when the abnormality of at least one device other than the regeneration relevant device is detected,
   wherein the degree of the output torque suppression by said first torque suppressing means is less than the degree of the output torque suppression by said second torque suppressing means.

2. An exhaust gas purifying apparatus according to 1, wherein the vehicle driven by said engine (1) includes drive control means for controlling a running condition of said vehicle (1) by controlling the output torque of said engine, and said exhaust gas purifying apparatus further includes drive control stopping means for stopping the operation of said drive control means when the abnormality of the at least one regeneration relevant device is detected.

3. An exhaust gas purifying method for an internal combustion engine (1) having a particulate filter (17) for trapping particulates in exhaust gases of said engine (1), said method comprising the steps of:

a) detecting an operating condition of said engine;

b) calculating an amount (GPM) of particulates accumulated in said particulate filter (17) according to the detected operating condition of said engine (1);

c) performing a regeneration process in which the accumulated particulates are burned when the amount of particulates reaches a predetermined threshold value (GPML);

d) detecting an abnormality of at least one regeneration relevant device (6, 12, 13, 15, 17, 19, 21, 23 - 25, 28 - 33) which affects calculation accuracy of the amount (GPM) of particulates calculated in step b); and

e) inhibiting the regeneration process when the abnormality of said at least one regeneration relevant device is detected; **characterized by**

f) suppressing an output torque of said engine when the abnormality of

said at least one regeneration relevant device is detected by limiting an amount of fuel (QINJ) supplied to said engine (1) so that the particulates accumulated in the particulate filter may not naturally burn, and

g) detecting an abnormality of at least one device other than the regeneration relevant device;

h) suppressing the output torque of said engine (1) when the abnormality of at least one device other than the regeneration relevant device is detected,

wherein the degree of the output torque suppression in said step f) is less than the degree of the output torque suppression in said step h).

4. An exhaust gas purifying method according to claims 3, wherein the vehicle driven by said engine (1) includes a drive control device for controlling a running condition of said vehicle (1) by controlling the output torque of said engine, and said method further includes the step of stopping the operation of said drive control device when the abnormality of the at least one regeneration relevant devise is detected.

**Patentansprüche**

1. Abgasreinigungsvorrichtung für einen Verbrennungsmotor (1), umfassend:

einen Partikelfilter (17) zum Auffangen von Partikeln in Abgasen des Motors (1);

Betriebszustanderfassungsmittel (26-33) zum Erfassen eines Betriebszustands des Motors;

Akkumulationsmengenberechnungsmittel zum Berechnen einer Menge (GPM) von in dem Partikelfilter (17) akkumulierten Partikeln gemäß dem erfassten Betriebszustand des Motors (1);

Regenerationsmittel zur Durchführung eines Regenerationsprozesses,

worin die akkumulierten Partikel verbrannt werden, wenn die Partikelmenge einen vorbestimmten Schwellenwert (GPML) erreicht;

erste Abnormalitätserfassungsmittel zum Erfassen einer Abnormalität von zumindest einer regenerationsrelevanten Vorrichtung (6, 12, 13, 15, 17, 19, 21, 23 - 25, 28 - 33), welche die Berechnungsgenauigkeit der von den Akkumulationsmengenberechnungsmitteln berechneten Partikelmenge (GPM) beeinträchtigt; und

Verhinderungsmittel zum Verhindern des Regenerationsprozesses durch die Regenerationsmittel, wenn die Abnormalität der zumindest einen regenerationsrelevanten Vorrichtung erfasst wird;

**gekennzeichnet durch**

erste Drehmomentunterdrückungsmittel zum Unterdrücken eines Ausgangsdrehmoments des Motors (1), wenn die Abnormalität der zumindest einen regenerationsrelevanten Vorrichtung erfasst wird,

**durch** Begrenzung einer dem Motor (1) zugeführten Kraftstoffmenge (QINJ), so dass die in dem Partikelfilter (17) akkumulierten Partikel nicht natürlich brennen können,

ferner enthaltend zweite Abnormalitätserfassungsmittel zum Erfassen einer Abnormalität an zumindest einer anderen Vorrichtung als der regenerationsrelevanten Vorrichtung, und zweite Drehmomentunterdrückungsmittel zum Unterdrücken des Ausgangsdrehmoments des Motors (1), wenn die Abnormalität der zumindest einen anderen Vorrichtung als der regenerationsrelevanten Vorrichtung erfasst wird,

worin der Grad der Ausgangsdrehmomentunterdrückung **durch** die ersten Drehmomentunterdrückungsmittel kleiner ist als der Grad der Ausgangsdrehmomentunterdrückung **durch** die zweiten Drehmomentunterdrückungsmittel.

**2.** Abgasreinigungsvorrichtung nach Anspruch 1, worin das von dem Motor (1) angetriebene Fahrzeug Antriebssteuerungsmittel enthält, um einen Fahrzustand des Fahrzeugs (1) durch Steuern/Regeln des Ausgangsdrehmoments des Motors zu steuern/zu regeln, und

wobei die Abgasreinigungsvorrichtung ferner Antriebssteuerungsstoppmittel enthält, um den Betrieb der Antriebssteuerungsmittel zu stoppen, wenn die Abnormalität der zumindest einen regenerationsrelevanten Vorrichtung erfasst wird.

**3.** Abgasreinigungsverfahren für einen Verbrennungsmotor (1) mit einem Partikelfilter (17) zum Auffangen von Partikeln in Abgasen des Motors (1), wobei das Verfahren die Schritte umfasst:

a) Erfassen eines Betriebszustands des Motors;

b) Berechnen einer Menge (GPM) von in dem Partikelfilter (17) akkumulierten Partikeln gemäß dem erfassten Betriebszustand des Motors (1);

c) Durchführen eines Regenerationsprozesses, worin die akkumulierten Partikel verbrannt werden, wenn die Partikelmenge einen vorbestimmten Schwellenwert (GPML) erreicht;

d) Erfassen einer Abnormalität von zumindest einer regenerationsrelevanten Vorrichtung (6, 12, 13, 15, 17, 19, 21, 23 - 25, 28 - 33), welche die Berechnungsgenauigkeit der in Schritt b) berechneten Partikelmenge (GPM) beeinträchtigt; und

e) Verhindern des Regenerationsprozesses, wenn die Abnormalität der zumindest einen regenerationsrelevanten Vorrichtung erfasst wird; **gekennzeichnet durch**

f) Unterdrücken des Ausgangsdrehmoments des Motors, wenn Abnormalität der zumindest einen regenerationsrelevanten Vorrichtung erfasst wird, **durch** Begrenzen einer dem Motor (1) zugeführten Kraftstoffmenge (QINJ), derart, dass die in dem Partikelfilter akkumulierten Partikel nicht natürlich brennen können, und

g) Erfassen einer Abnormalität von zumindest einer anderen Vorrichtung als der regenerationsrelevanten Vorrichtung;

h) Unterdrücken des Ausgangsdrehmoments des Motors (1), wenn die Abnormalität von zumindest einer anderen Vorrichtung als der regenerationsrelevanten Vorrichtung erfasst wird,

worin der Grad der Ausgangsdrehmomentunterdrückung in dem Schritt f) kleiner ist als der Grad der Ausgangsdrehmomentunterdrückung in dem Schritt h).

**4.** Abgasreinigungsverfahren nach Anspruch 3, worin das von dem Motor (1) angetriebene Fahrzeug eine Antriebssteuerungsvorrichtung enthält, um einen Fahrzustand des Fahrzeugs (1) durch Steuern/Regeln des Ausgangsdrehmoments des Motors zu steuern/zu regeln, und das Verfahren ferner den Schritt enthält, den Betrieb der Antriebssteuerungsvorrichtung zu stoppen, wenn die Abnormalität der zumindest einen regenerationsrelevanten Vorrichtung erfasst wird.

**Revendications**

**1.** Appareil de purification de gaz d'échappement pour un moteur à combustion interne (1) comprenant :

un filtre à particules (17) permettant de piéger des particules dans des gaz d'échappement dudit moteur (1) ;

un moyen de détection de condition de fonctionnement (26 à 33) permettant de détecter une condition de fonctionnement dudit moteur ;

un moyen de calcul de quantité d'accumulation permettant de calculer une quantité (GPM) de particules accumulées dans ledit filtre à particules (17) selon la condition de fonctionnement détectée dudit moteur (1) ;

un moyen de régénération permettant d'effectuer un processus de régénération dans lequel les particules accumulées sont brûlées lorsque la quantité de particules atteint une valeur seuil prédéterminée (GPML) ;

un premier moyen de détection d'anomalie permettant de détecter une anomalie d'au moins un dispositif adapté à la régénération (6, 12, 13, 15, 17, 19, 21, 23 à 25, 28 à 33) qui affecte la précision de calcul de la quantité de particules (GPM) calculée par ledit moyen de calcul de quantité d'accumulation ; et

un moyen d'inhibition permettant d'inhiber le processus de régénération par ledit moyen de régénération lorsque l'anomalie dudit au moins un dispositif adapté à la régénération est détectée ; **caractérisé par**

un premier moyen de suppression de couple permettant de supprimer un couple de sortie dudit moteur (1) lorsque l'anomalie dudit au moins un dispositif adapté à la régénération est détectée en limitant une quantité de carburant (QINJ) fourni audit moteur (1) de sorte que les particules accumulées dans le filtre à particules (17) ne peuvent pas brûler naturellement,

incluant en outre un second moyen de détection d'anomalie permettant de détecter une anomalie d'au moins un dispositif autre que le dispositif adapté à la régénération, et un second moyen de suppression de couple permettant de supprimer le couple de sortie dudit moteur (1) lorsque l'anomalie d'au moins un dispositif autre que le dispositif adapté à la régénération est détectée,

dans lequel le degré de la suppression de couple de sortie par ledit premier moyen de suppression de couple est inférieur au degré de la suppression de couple de sortie par ledit second moyen de suppression de couple.

2.  Appareil de purification de gaz d'échappement selon la revendication 1, dans lequel le véhicule entraîné par ledit moteur (1) inclut un moyen de commande d'entraînement permettant de commander une condition de déplacement dudit véhicule (1) en commandant le couple de sortie dudit moteur, et ledit appareil de purification de gaz d'échappement inclut en outre un moyen d'arrêt de commande d'entraînement permettant d'arrêter le fonctionnement dudit moyen de commande d'entraînement lorsque l'anomalie du au moins un dispositif adapté à la régénération est détectée.

3.  Procédé de purification de gaz d'échappement pour un moteur à combustion interne (1) comportant un filtre à particules (17) permettant de piéger des particules dans les gaz d'échappement dudit moteur (1), ledit procédé comprenant les étapes de:

> a) détection d'une condition de fonctionnement dudit moteur ;
> b) calcul d'une quantité (GPM) de particules accumulées dans ledit filtre à particules (17) selon la condition de fonctionnement détectée dudit moteur (1) ;
> c) mise en oeuvre d'un processus de régénération dans lequel les particules accumulées sont brûlées lorsque la quantité de particules atteint une valeur seuil prédéterminée (GPML) ;
> d) détection d'une anomalie d'au moins un dispositif adapté à la régénération (6, 12, 13, 15, 17, 19, 21, 23 à 25, 28 à 33) qui affecte la précision de calcul de la quantité (GPM) de particules calculée à l'étape b) ; et
> e) inhibition du processus de régénération lorsque l'anomalie dudit au moins un dispositif adapté à la régénération est détectée ; **caractérisé par** les étapes de
> f) suppression d'un couple de sortie dudit moteur lorsque l'anomalie dudit au moins un dispositif adapté à la régénération est détecté en limitant une quantité de carburant (QINJ) fourni audit moteur (1) de sorte que les particules accumulées dans le filtre à particules ne peuvent pas brûler naturellement, et
> g) détection d'une anomalie d'au moins un dispositif autre que le dispositif adapté à la régénération ;
> h) suppression du couple de sortie dudit moteur (1) lorsque l'anomalie d'au moins un dispositif autre que le dispositif adapté à la régénération est détectée,

dans lequel le degré de la suppression de couple de sortie à ladite étape f) est inférieur au degré de la suppression de couple de sortie à ladite étape h).

4.  Procédé de purification de gaz d'échappement selon la revendication 3, dans lequel le véhicule entraîné par ledit moteur (1) inclut un dispositif de commande d'entraînement permettant de commander une condition de déplacement dudit véhicule (1) en commandant le couple de sortie dudit moteur, et ledit procédé inclut en outre l'étape consistant à arrêter le fonctionnement dudit dispositif de commande d'entraînement lorsque l'anomalie du au moins un dispositif adapté à la régénération est détectée.

## FIG. 1

## FIG. 2

REGENERATION CONTROL

S11 — CALCULATE GPM

S12 — FFAIL1＝1？
YES →
NO ↓

S13 — GPM＝0？
YES →
NO ↓

S15 — FRG＝1？
YES →
NO ↓

S16 — GPM≧GPML？
NO →
YES ↓

S17 — PREDETERMINED OPERATING CONDITION？
NO →
YES ↓

S18 — FRG←0

S19 — PERFORM REGENERATION PROCESS

S20 — FRG←1

EXIT

## FIG. 3

```
                    CALCULATION OF QINJ

          S31
    YES                      FFAIL1=1 ?
  S32                            │ NO
                   S35
  RETRIEVE TRLMT1       FFAIL2=1 ?           NO
  TABLE ACCORDING
     TO NE                        │ YES            S38  RETRIEVE TRLMTN
      S33                S36  RETRIEVE TRLMT2            TABLE ACCORDING
  TRLMT←TRLMT1               TABLE ACCORDING                  TO NE
                                 TO NE          S39
                          S37                       TRLMT←TRLMTN
                          TRLMT←TRLMT2

          S40         CALCULATE QINJ
                    ACCORDING TO NE & AP

          S41         CALCULATE QILMT
                    ACCORDING TO TRLMT

          S42          QINJ>QILMT ?        NO

                            │ YES
          S43          QINJ←QILMT

                           EXIT
```

FIG. 4

## FIG. 5

```
         ┌──────────────────────┐
         │   CRUISE  CONTROL     │
         └──────────┬───────────┘
                    │
S51                 ▼
         ╱────────────────────╲        YES
         ╲     FFAIL1=1?       ╱────────────┐
          ╲──────────┬────────╱             │
                     │ NO                   │
S52                  ▼                      │
         ╱────────────────────╲    NO       │
         ╲      FCRS=1?        ╱─────────────┤
          ╲──────────┬────────╱             │
                     │ YES                  │
S53      ┌──────────────────────┐           │
         │   OUTPUT  TORQUE      │           │
         │ CONTROL  ACCORDING    │           │
         │       TO  VP          │           │
         └──────────┬───────────┘           │
                    │◄─────────────────────┘
                    ▼
         ┌──────────────────────┐
         │        EXIT          │
         └──────────────────────┘
```

## FIG. 6

```
        ┌──────────────────────────┐
        │   SETTING  OF  FFAIL1     │
        └──────────────────────────┘
                     │
   S61               ▼
      ┌──────────────────────────┐  NO
      │  VARIOUS  SENSORS         ├──────────►
      │  NORMAL ?                 │
      └──────────────────────────┘
               │ YES
   S62         ▼
      ┌──────────────────────────┐  NO
      │  SCV  NORMAL ?            ├──────────►
      └──────────────────────────┘
               │ YES
   S63         ▼
      ┌──────────────────────────┐  NO
      │  EGR  MECHANISM           ├──────────►
      │  NORMAL ?                 │
      └──────────────────────────┘
               │ YES
   S64         ▼
      ┌──────────────────────────┐  NO
      │  FUEL  INJECTION          ├──────────►
      │  VALVES  NORMAL ?         │
      └──────────────────────────┘
               │ YES
   S65         ▼
      ┌──────────────────────────┐  NO
      │  INTAKE  SHUTTER          ├──────────►
      │  NORMAL ?                 │
      └──────────────────────────┘
               │ YES
   S66         ▼
      ┌──────────────────────────┐  NO
      │  ECU  NORMAL ?            ├──────────►
      └──────────────────────────┘
               │ YES
   S67         ▼
      ┌──────────────────────────┐  NO
      │  DPF  NORMAL ?            ├──────────►
      └──────────────────────────┘
               │ YES
   S68         ▼
      ┌──────────────────────────┐  NO
      │  HIGH-PRESSURE            ├──────────►
      │  PUMP  NORMAL ?           │
      └──────────────────────────┘
               │ YES          S70
   S69         ▼                      ▼
      ┌─────────────────┐      ┌─────────────────┐
      │  FFAIL1 ← 0     │      │  FFAIL1 ← 1     │
      └─────────────────┘      └─────────────────┘
               │                      │
               ▼◄─────────────────────┘
        ┌──────────────┐
        │     EXIT     │
        └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001123870 A
- EP 1464815 A1
- US 6651638 B1